# EUROPÄISCHE PATENTSCHRIFT

(11) **EP 3 419 128 B1**
(45) Veröffentlichungstag und Bekanntmachung des Hinweises auf die Patenterteilung: **08.12.2021**
(21) Anmeldenummer: 18173853.5
(22) Anmeldetag: 23.05.2018
(51) Int. Cl.: H02B 1/32

(54) **STECKDOSENLEISTE FÜR EINEN VERTEILERKASTEN**
POWER STRIP FOR A DISTRIBUTION BOX
MULTIPRISE POUR UNE BOÎTE DE DISTRIBUTION

(30) Priorität: 22.06.2017 DE 102017113811
(43) Veröffentlichungstag der Anmeldung: 26.12.2018
(73) Patentinhaber: ABB Schweiz AG, 5400 Baden (CH)
(72) Erfinder: Kilgus, Kai, 76593 Gernsbach (DE); Roth, Michael, 77880 Sasach (DE)
(74) Vertreter: Wesch, Arno

(56) Entgegenhaltungen:
- EP-A1- 0 162 181
- EP-B1- 2 738 881
- FR-A1- 2 957 198
- US-A1- 2008 258 026
- US-A1- 2016 021 779

## Beschreibung

Die Erfindung betrifft eine Anordnung zur Verwendung in einem Verteilerkasten nach dem Oberbegriff des Patentanspruchs 1.

Aus der US 2008/0258026 A1 ist eine Anordnung mit einer Steckdosenleiste bekannt, die durch einen Schraubenkopf mit einem L-förmigen Winkel verbindbar ist.

Die FR 2 957 198 A zeigt eine Steckdosenleiste, die durch eine Nietverbindung mit einer Traverse verbunden ist.

Aus der DE 10 2013 102 232 A1 ist ein Unterputzkasten der Elektroinstallation von Gebäuden bekannt, bei welchem Steckdosen für die Entnahme von Netzstrom in einem Gehäuse angeordnet sind. Hier bildet der Kastenboden eine Montagefläche zur mittelbaren oder unmittelbaren Befestigung von Schienen und/oder Installationsgeräten. Die Steckdosen sind insoweit Teil einer Baugruppe, welche einen Teil einer oberen horizontalen Seitenwand bildet. Hiermit geht einher, dass die Steckdosen am oberen Ende eines Unterputzverteilerkastens, nämlich an dessen Außenwand, angeordnet sind. Des Weiteren sind im Unterputzverteilerkasten am Kastenboden Montageplatten angeordnet, an denen Geräte festgelegt werden können. Hierbei ist nachteilig, dass die Steckdosen unter Umständen nur schwer erreichbar sind, da montierte Geräte den Zugang zu diesen erschweren. Außerdem ist bei der bekannten Anordnung die Einsteckrichtung von Steckern in die Steckdosen parallel zu den Montageplatten, welche an einer Grundfläche anliegen, orientiert.

Aus der DE 299 15 910 U1 ist eine Montagevorrichtung für elektrische Verteileranlagen bekannt, welche U-förmige Montageviellochschienen umfasst. Hier bildet die freie Fläche zwischen den Schienen eine Montagefläche zur mittelbaren oder unmittelbaren Befestigung von Schienen und/oder Installationsgeräten.

Den Montageviellochschienen sind Montagetraversen zugeordnet, welche in der Einbautiefe und Höhe stufenlos einstellbar sind. An den Montagetraversen können Installationsgeräte montiert werden.

Aus der EP 2 738 881 B1 ist eine Verteilereinrichtung für eine Elektroinstallation bekannt. Diese umfasst eine Anschlussleistenanordnung, um Schutzerdungsleiter und Nullleiter anzuschließen. Die Anschlussleistenanordnung umfasst einen Befestigungsstreifen und Module, die am Befestigungsstreifen nebeneinander in einer Reihe befestigt werden können. Am Befestigungsstreifen sind Balken angeordnet, welche in einen Schlitz eingreifen können, der einem Modul zugeordnet ist. Hierdurch kann ein Modul formschlüssig mit dem Befestigungsstreifen verbunden werden.

Die US 2008/0258026 A1 zeigt eine Halterung, die geformt ist, um Geräte wie zum Beispiel eine Stromverteilungseinheit in verschiedenen Ausrichtungen in einem Geräteträger anzubringen. Die Halterung hat mehrere Schlitze zur Aufnahme von Befestigungsschrauben zum Ankoppeln der Halterung an das Gerätegestell und an das Gerät.

Die FR 2 957 198 A1 zeigt eine elektrische Box, die dazu bestimmt ist, an einer Wand befestigt zu werden, und die ein Chassis, mindestens ein elektrisches Modul mit sehr niedriger Spannung und mindestens ein elektrisches Niederspannungsmodul, angebunden an ein Niederspannungsnetzwerk umfasst, wobei die elektrische Box in einer Einbaulage einen zu Servicezwecken zugänglichen Benutzerbereich aufweist. Diese elektrische Box ist dadurch gekennzeichnet, dass das elektrische Niederspannungsmodul an dem Rest der elektrischen Box durch ein mechanisches Haltemittel befestigt ist, das vom Benutzerbereich aus nicht zugänglich ist.

Vor diesem Hintergrund besteht ein Bedarf nach einem Verteilerkasten, in welchem Steckdosen möglichst flexibel anordenbar sind, so dass diese einfach zugänglich sind. Der Erfindung liegt daher die Aufgabe zugrunde, Steckdosen innerhalb eines Verteilerkastens möglichst flexibel und leicht zugänglich anzuordnen.

Diese Aufgabe wird mit den Merkmalen des Anspruchs 1 gelöst. Danach ist die eingangs genannte Anordnung dadurch gekennzeichnet, dass die Steckdosenleiste mit einem Befestigungsadapter verbunden oder reversibel verbindbar ist, wobei auf und/ oder innerhalb und/oder an der Montagefläche mindestens ein Positioniermittel zum definierten Positionieren des Befestigungsadapters innerhalb der Montagefläche angeordnet ist.

Erfindungsgemäß ist erkannt worden, dass eine Steckdosenleiste vollständig innerhalb und/oder an und/oder auf der Montagefläche an beliebigen Stellen anordenbar ist. Ganz im Gegensatz zum Stand der Technik ist die Steckdosenleiste nicht nur an einer Außenfläche des Verteilerkastens anordenbar, sondern an beliebigen Stellen innerhalb des Verteilerkastens, nämlich innerhalb von dessen Montagefläche. Der Befestigungsadapter, welcher sowohl als separat von der Steckdosenleiste gefertigtes Teil als auch als mit dieser einstückig verbundenes Teil ausgestaltet sein kann, ist derart ausgebildet, dass er gemeinsam mit der Steckdosenleiste bevorzugt inner halb der Begrenzungsränder der Montagefläche positionierbar ist. Des Weiteren sind das oder die Positioniermittel derart auf die Dimensionen des Befestigungsadapters und der Steckdosenleiste abgestimmt und angeordnet, dass die Steckdosenleiste an beliebigen Stellen innerhalb oder an oder auf der Montagefläche anordenbar ist. Ein Benutzer kann daher eine Steckdosenleiste quer und längs innerhalb der Montagefläche verschieben und diese an Positionen festlegen, welche leicht und problemlos zugänglich sind. Die Steckdosen sind so innerhalb eines Verteilerkastens flexibel und leicht zugänglich anordenbar.

Gemäß einer besonders vorteilhaften Ausführung der Erfindung ist mindestens ein Positioniermittel als Dom oder Vertiefung ausgestaltet, mit welchem bzw. mit welcher der Befestigungsadapter kraft-, form- und/ oder stoffschlüssig verbindbar oder verbunden ist. Durch diese konkrete Ausgestaltung kann ein Befestigungsadapter an einer Stelle, bevorzugt jedoch an zwei Stellen, mit einem Dom oder einer Vertiefung verschraubt, verklemmt oder verrastet werden. Denkbar ist auch, den Befestigungsadapter mit dem Dom oder der Vertiefung zu verkleben. Der Dom oder die Vertiefung bzw. die Dome oder die Vertiefungen können als isoliert voneinander anordenbare Positioniermittel an ganz beliebigen Stellen der Montagefläche vorgesehen werden, um später eine Steckdosenleiste an diesen beliebigen Stellen montieren zu können.

Gemäß einer weiteren vorteilhaften Ausgestaltung der Erfindung ist mindestens ein Positioniermittel als Schiene ausgestaltet, mit welcher der Befestigungsadapter kraft-, form- und/ oder stoffschlüssig verbunden ist oder mit welcher der Befestigungsadapter an verschiedenen Positionen kraft-, form- und/ oder stoffschlüssig längs der Schiene verbindbar ist. Bevorzugt ist die Schiene als Hutschiene oder Profilschiene ausgestaltet. Durch diese konkrete Ausgestaltung ist die Steckdosenleiste längs der Schiene verschieblich und an beliebigen Stellen der Montagefläche festlegbar. Es ist denkbar, dass die Steckdosenleiste mit einem integrierten, mit der Steckdosenleiste einstückig ausgebildeten Befestigungsadapter in einfacher Weise auf die Schiene bzw. Schienen aufgesteckt, aufgeschraubt oder aufgerastet wird. Bevorzugt ist vorgesehen, dass zwei Schienen parallel zueinander angeordnet sind, so dass die Steckdosenleiste bzw. der Befestigungsadapter an zwei Stellen mit jeweils einer Schiene verbunden ist. Die freie Fläche zwischen den beiden Schienen bildet hier die Montagefläche.

Gemäß einer weiteren vorteilhaften Ausgestaltung der Erfindung ist die Montagefläche als Grundplatte eines zumindest teilweise offenen oder zumindest teilweise verschließbaren Gehäuses ausgebildet. Durch diese konkrete Ausgestaltung ist die Montagefläche, welche zumindest teilweise von einem Rand eingefasst sein kann, leicht zugänglich, um Montageschritte durchzuführen. Danach wird eine Gehäuseabdeckung auf die Grundplatte bzw. deren Ränder oder Randeinfassungen aufgesetzt, so dass das Gehäuse komplettiert ist. Schließlich kann das Gehäuse entweder vollständig verschlossen oder teilweise offengehalten werden, so dass ein Benutzer an einzelne Module, Installationsgeräte oder Steckdosen gelangen kann.

Gemäß der Erfindung ist der Befestigungsadapter als von der Steckdosenleiste separierbares Teil ausgebildet und weist mindestens ein erstes Formschlusselement auf, welches mit mindestens einem zweiten Formschlusselement der Steckdosenleiste reversibel verbindbar und/ oder verrastbar ist. Durch diese konkrete Ausgestaltung kann zunächst der Befestigungsadapter an einer beliebigen Stelle innerhalb der Montagefläche auf der Montagefläche festgelegt werden. Danach kann die Steckdosenleiste auf den Befestigungsadapter aufgeschoben werden, in dem nämlich die Formschlusselemente miteinander in Formschluss gelangen. Um ein unerwünschtes Lösen der Steckdosenleiste vom Befestigungsadapter zu verhindern, ist die Steckdosenleiste mit dem Befestigungsadapter verrastbar.

Das erste Formschlusselement ist als ein im Querschnitt T-förmiger, von einer Ebene abragender Balken ausgestaltet, wobei das zweite Formschlusselement als im Querschnitt T-förmige Nut zur Aufnahme des Balkens ausgebildet ist. Bevorzugt sind der Balken und die Nut orthogonal oder parallel zur Montagefläche orientiert. Durch diese konkrete Ausgestaltung ist die Steckdosenleiste zwar in einer Richtung auf den Befestigungsadapter aufschiebbar, in einer anderen Richtung ist jedoch durch die T-förmige Ausgestaltung ein Hinterschnitt geschaffen, der ein Ablösen in einer zur Aufschieberichtung orthogonalen Richtung verhindert.

Der Befestigungsadapter ist als längliche Leiste ausgebildet, welche einen Mittelabschnitt, bevorzugt mit mehreren Balken, aufweist, wobei beidseits des Mittelabschnitts jeweils mindestens ein Anbindemittel ausgebildet ist, welches jeweils mit einem Positioniermittel verbindbar oder verbunden ist. Durch diese konkrete Ausgestaltung ist der Befestigungsadapter als platzsparende längliche Leiste ausgebildet. Diese Leiste ist nur an ihren Endabschnitten, welche einander gegenüber liegen, jeweils mit einem Positioniermittel verbunden. Eine solche Leiste kann sich beispielsweise zwischen zwei Schienen erstrecken, so dass der Mittelabschnitt nahezu völlig frei zugänglich ist. Die Anbindemittel können mit einem Positioniermittel verschraubt, verrastet oder sogar verklebt werden.

An der Steckdosenleiste ist mindestens eine Rastzunge angeordnet, welche mit einer Rastaufnahme des Befestigungsadapters reversibel verrastbar ist. Hierdurch wird ein unerwünschtes Lösen der Steckdosenleiste vom Befestigungsadapter unterbunden.

Vor diesem Hintergrund ist auch denkbar, dass die oben beschriebenen Balken der Steckdosenleiste und die Nuten oder Schlitze dem Befestigungsadapter zugeordnet sind. Auch die Rastzungen können am Befestigungsadapter und die Rastaufnahmen an der Steckdosenleiste angeordnet sein.

In einer bevorzugten Ausführungsform ist das zweite Formschlusselement der Steckdosenleiste an der den Steck-Einführöffnungen der Steckdosenleiste gegenüberliegenden Seite der Steckdosenleiste angebracht. Wenn die Steckdosenleiste in dieser Ausführungsform auf den Befestigungsadapter aufgeschoben ist, ist somit die Einsteckrichtung von Steckern in die Steckdosen der Steckdosenleiste parallel zur Montagefläche orientiert.

In einer weiteren bevorzugten Ausführungsform ist das zweite Formschlusselement der Steckdosenleiste an einer Seite der Steckdosenleiste angebracht, die im rechten Winkel zu der Seite mit den Steck-Einführöffnungen der Steckdosenleiste orientiert ist. Wenn die Steckdosenleiste in dieser Ausführungsform auf den Befestigungsadapter aufgeschoben ist, ist weiter vorteilhaft die Einsteckrichtung von Steckern in die Steckdosen der Steckdosenleiste orthogonal zur Montagefläche orientiert. Durch konkrete Ausgestaltung kann ein Benutzer dadurch einen Stecker direkt in die Steckdose schieben, ohne sein Handgelenk in unbequemer Weise zu verkrümmen.

Bevorzugt findet die hier beschriebene Anordnung Verwendung in einem Verteilerkasten, welcher als Industrieverteilerkasten verwendet wird. In großen Industrieverteilerkästen sind Steckdosenleisten üblicherweise vorgesehen. Durch die hier beschriebene Anordnung sind die Steckdosenleisten flexibel innerhalb eines großen Industrieverteilerkastens anordenbar.

Eine Steckdosenleiste ist bevorzugt auf Hutschienen aufrastbar, mit oder ohne einen separaten Befestigungsadapter. Kabel für eine Steckdosenleiste können seitlich geführt werden. Eine Steckdosenleiste ist von vorne in den Verteilerkasten einschiebbar und auch wieder lösbar. Die Einschubrichtung einer Steckdosenleiste ist bevorzugt orthogonal zu der Ebene, in der die Hutschienen oder Profilschienen verlaufen.

In der Zeichnung zeigen
- Fig. 1: eine perspektivische Ansicht einer Anordnung, bei welcher ein Befestigungsadapter als separates Teil vollständig innerhalb einer Grundplatte angeordnet ist,
- Fig. 2: die Anordnung gemäß Fig. 1, wobei eine Rückansicht der noch nicht eingeschobenen Steckdosenleiste dargestellt ist,
- Fig. 3: eine Ansicht der Anordnung gemäß Fig. 1 und Fig. 2, wobei die Steckdosenleiste auf den Befestigungsadapter aufgeschoben ist,
- Fig. 4: eine Ansicht der Anordnung gemäß Fig. 3, wobei eine Gehäuseabdeckung auf die Grundplatte aufgesetzt wird,
- Fig. 5: eine weitere Anordnung, bei welcher die Grundplatte von einer Randeinfassung umgeben und die Steckdosenleiste noch nicht auf den Befestigungsadapter aufgeschoben ist,
- Fig. 6: die Anordnung gemäß Fig. 5, wobei die Steckdosenleiste auf den Befestigungsadapter aufgeschoben ist,
- Fig. 7: eine weitere Ansicht der Anordnung gemäß Fig. 5, wobei eine Rückansicht der noch nicht aufgeschobenen Steckdosenleiste dargestellt ist,
- Fig. 8: eine weitere Ansicht der Anordnung gemäß Fig. 7,
- Fig. 9: eine weitere Anordnung, bei welcher zwei Schienen parallel angeordnet sind und ein Befestigungsadapter an zwei gegenüberliegenden Enden jeweils an einer Schiene befestigt ist, wobei die Steckdosenleiste noch nicht fertig montiert ist,
- Fig. 10: die Anordnung gemäß Fig. 9, wobei die Steckdosenleiste auf den Befestigungsadapter aufgeschoben ist,
- Fig. 11: eine Ansicht der Anordnung gemäß Fig. 9, wobei eine Rückansicht der Steckdosenleiste dargestellt ist,
- Fig. 12: eine weitere Ansicht der Anordnung gemäß Fig. 11,
- Fig. 13: eine Ansicht der Rückseite der Steckdosenleiste, wobei an dieser Formschlusselemente in Form von im Querschnitt T-förmigen Schlitzen oder Nuten ausgebildet sind und wobei Rastzungen vorgesehen sind, und
- Fig. 14: eine perspektivische Vorderansicht der Steckdosenleiste.

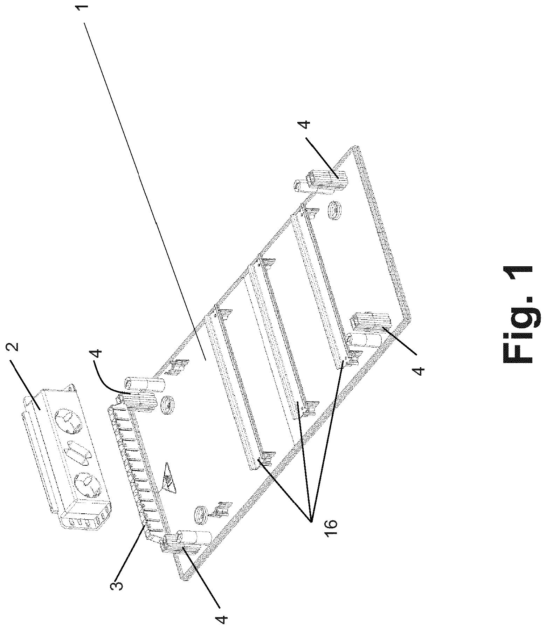

Fig. 1 zeigt eine Anordnung zur Verwendung in einem Verteilerkasten, umfassend eine Montagefläche 1 zur mittelbaren oder unmittelbaren Befestigung von Schienen, Traversen 16 und/ oder Installationsgeräten sowie mindestens einer Steckdosenleiste 2 mit Steckdosen für die Entnahme von Netzstrom. Die Montagefläche 1 ist hier als im Wesentlichen rechteckige und ebene Grundplatte ausgestaltet. Auf der Montagefläche 1 können dabei eine Vielzahl von Modulen oder Installationsgeräten angeordnet werden. Hierzu sind Traversen 16 in der Ausgestaltung als Hutprofiltragschienen vorgesehen und mittels domartiger Positioniermittel auf der Montagefläche befestigt, auf denen Installationsgeräte in an sich bekannter Weise reversibel aufgeschnappt werden können.

Die Steckdosenleiste 2 ist mit einem Befestigungsadapter 3 reversibel verbindbar, wobei auf und innerhalb der Montagefläche 1 mindestens ein Positioniermittel, hier konkret zwei Positioniermittel, zum definierten Positionieren des Befestigungsadapters 3 innerhalb der Montagefläche 1 angeordnet ist bzw. sind.

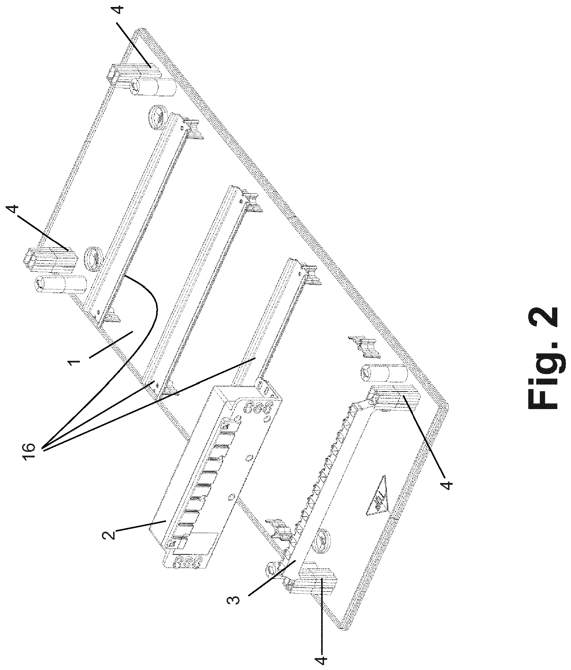

Die zwei Positioniermittel sind jeweils als Dome 4 ausgestaltet, mit welchen der Befestigungsadapter 3 formschlüssig verbunden ist. Im konkreten Fall ist der Befestigungsadapter 3 mit den Domen 4 verschraubt, kann aber auch auf die Dome 4 aufgesteckt sein. Am gegenüberliegenden Ende der Montagefläche 1 sind weitere Dome 4 vorgesehen, an welchen ebenfalls ein Befestigungsadapter 3 angeordnet werden könnte. Fig. 2 zeigt eine Ansicht der Rückseite der Anordnung gemäß Fig. 1, wobei die Steckdosenleiste 2 noch nicht auf den Befestigungsadapter 3 aufgeschoben ist.

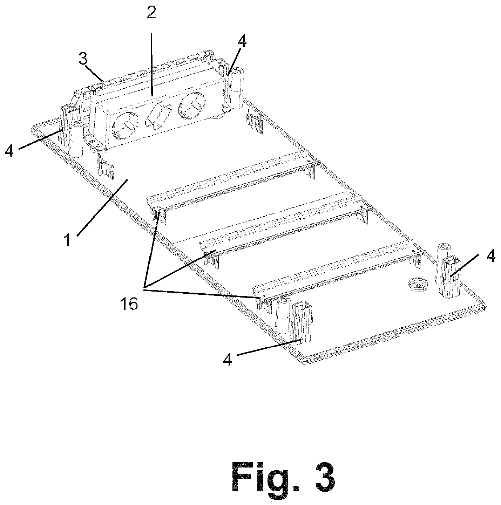

Fig. 3 zeigt die Anordnung gemäß Fig. 1 und 2, wobei die Steckdosenleiste 2 auf den Befestigungsadapter 3 aufgeschoben ist.

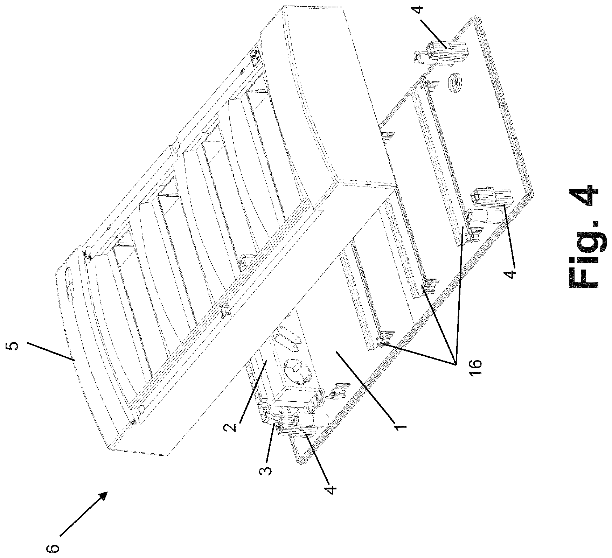

Fig. 4 zeigt die Anordnung gemäß Fig. 1 bis 3, wobei eine Gehäuseabdeckung 5 auf die Anordnung aufgesetzt wird, um die Steckdosenleiste 2 und den Befestigungsadapter 3, vollständig innerhalb der Montagefläche 1 liegend, zu verdecken. Insoweit ist die Montagefläche 1 als Grundplatte eines zumindest teilweise offenen und teilweise verschließbaren Gehäuses 6 ausgebildet.

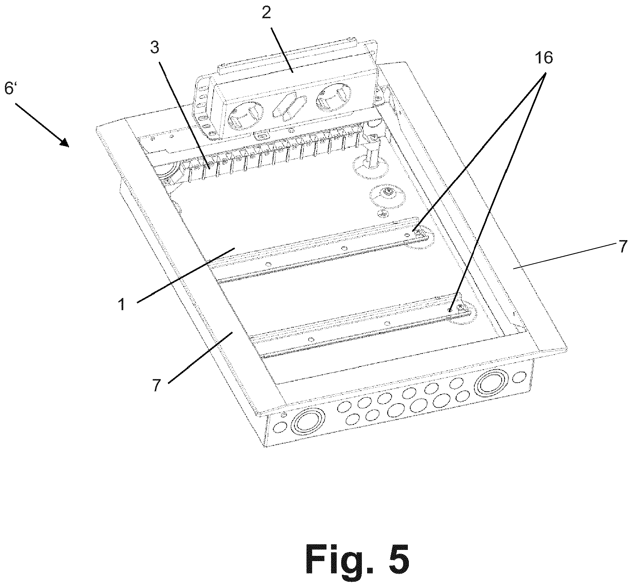

Ein weiteres Gehäuse 6' ist in Fig. 5 gezeigt, bei welchem die Grundplatte, nämlich die Montagefläche 1, von einer Randeinfassung 7 umgeben ist. Auch in Fig. 5 liegt die noch nicht eingeschobene Steckdosenleiste 2 sowie der Befestigungsadapter 3 vollständig innerhalb der Randeinfassung 7 und innerhalb der Montagefläche 1.

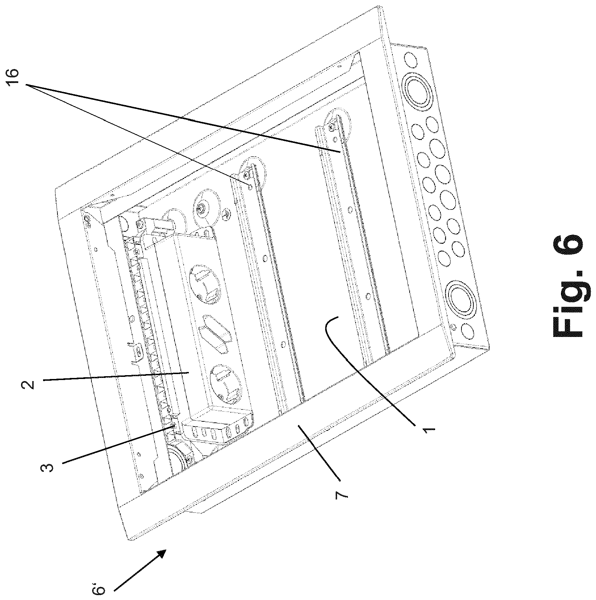

Fig. 6 zeigt die Anordnung gemäß Fig. 5, wobei die Steckdosenleiste 2 auf den Befestigungsadapter 3 aufgeschoben ist.

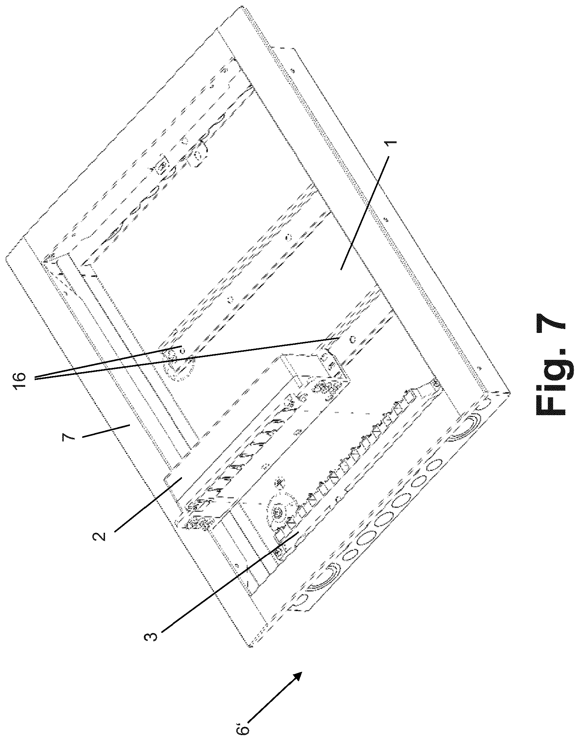

Fig. 7 zeigt das Gehäuse 6', wobei eine Rückansicht der noch nicht aufgeschobenen Steckdosenleiste 2 dargestellt ist.

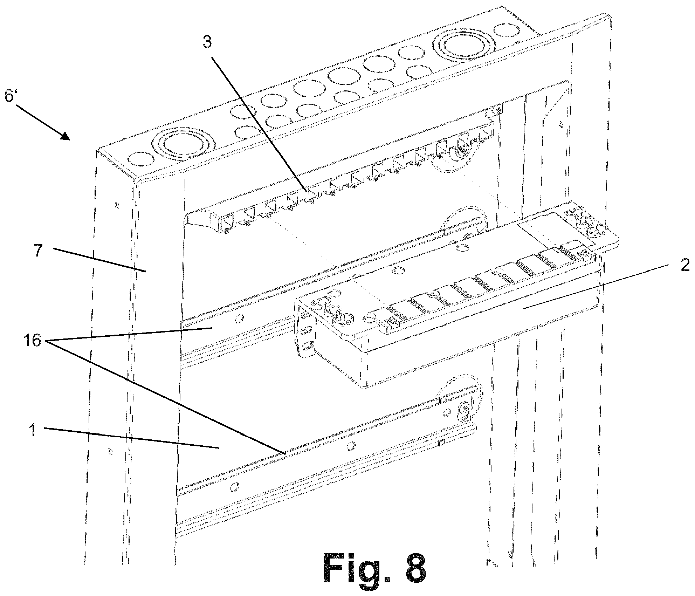

Fig. 8 zeigt eine weitere Rückansicht der noch nicht aufgeschobenen Steckdosenleiste 2 des Gehäuses 6'.

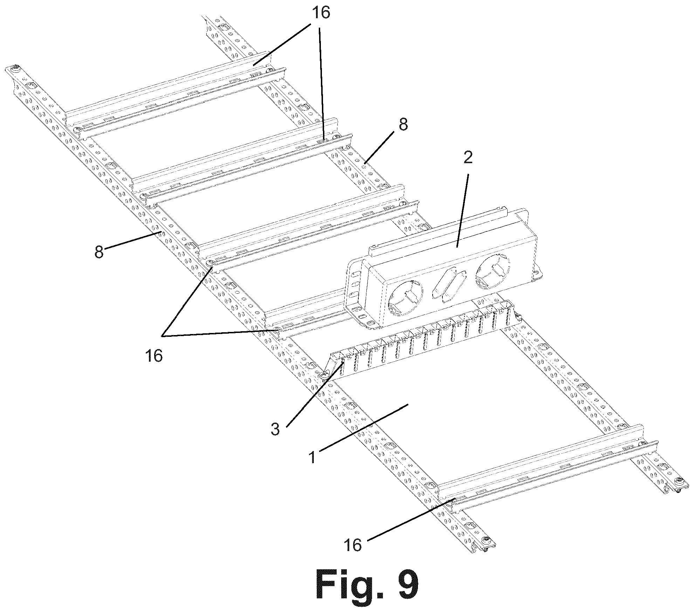

Fig. 9 zeigt eine Anordnung mit einer noch nicht auf- bzw. eingeschobenen Steckdosenleiste 2 und einem bereits montierten Befestigungsadapter 3. Es sind zwei Positioniermittel vorgesehen, welche als Schienen 8 ausgestaltet sind. Mit den Schienen 8 ist der Befestigungsadapter 3 formschlüssig verbunden, nämlich verschraubt. Der Befestigungsadapter 3 ist an vielen verschiedenen Stellen der Schienen 8 anschraubbar. Die Schienen 8 sind als Profilschienen mit einer Vielzahl von Löchern ausgestaltet. Die freie Fläche zwischen den beiden Schienen 8 bildet hier die Montagefläche 1. Auf der Montagefläche 1 können eine Vielzahl von Modulen oder Installationsgeräten angeordnet werden. Hierzu sind Traversen 16 in der Ausgestaltung als Hutprofiltragschienen vorgesehen und quer zu den Schienen 8 angeordnet und an den Schienen 8 befestigt, auf denen Installationsgeräte (hier nicht dargestellt) in an sich bekannter Weise reversibel aufgeschnappt werden können.

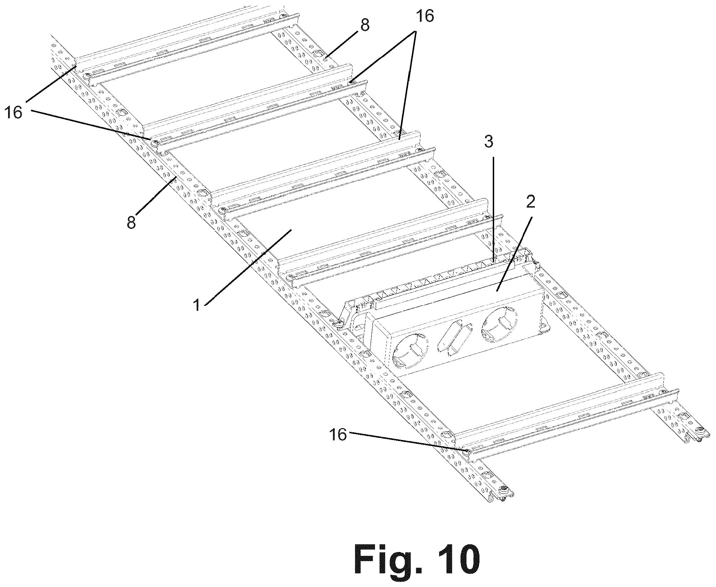

Fig. 10 zeigt die Anordnung gemäß Fig. 9, wobei die Steckdosenleiste 2 auf den Befestigungsadapter 3 aufgeschoben ist. Die Schienen 8 sind parallel zueinander angeordnet. Zwischen den Schienen 8 erstrecken sich Traversen 16.

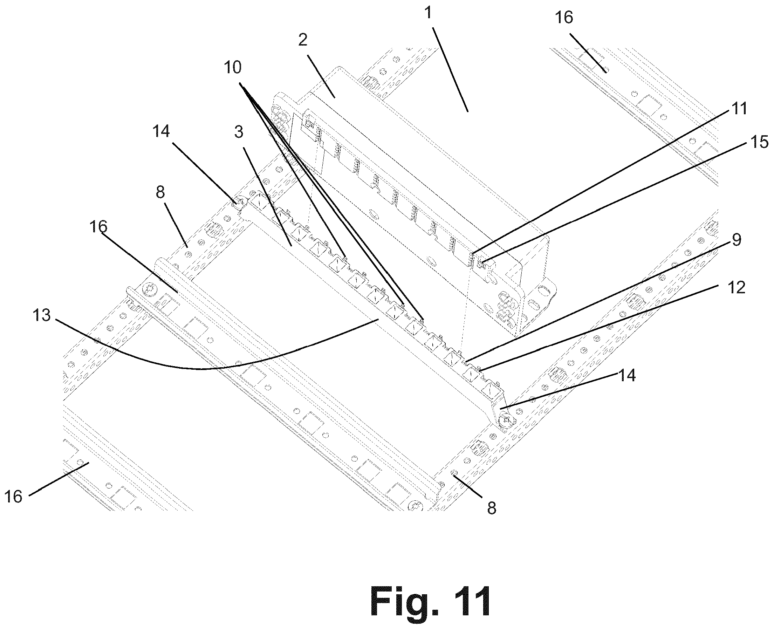

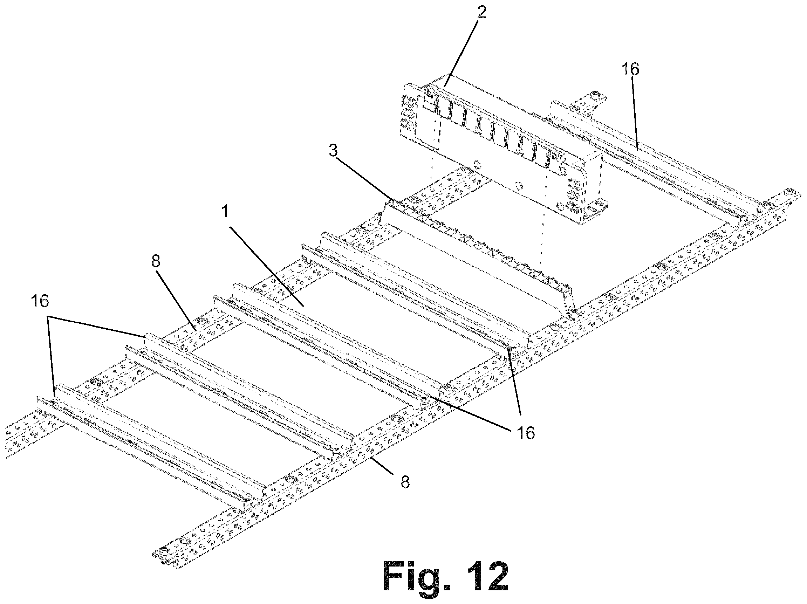

Fig. 11 und 12 zeigen die Anordnung gemäß Fig. 9 in einer rückwärtigen Ansicht der Steckdosenleiste 2, welche noch nicht auf den Befestigungsadapter 3 aufgeschoben ist. Fig. 11 zeigt deutlich, dass der Befestigungsadapter 3 an zwei gegenüberliegenden Enden mit den Schienen 8 verschraubt ist.

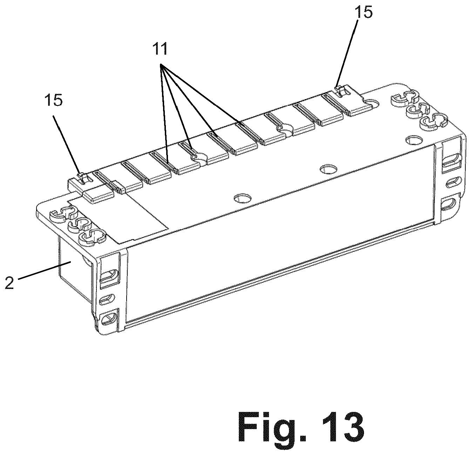

Fig. 13 zeigt eine Rückansicht der Steckdosenleiste 2. Fig. 11 und 13 zeigen besonders deutlich, dass der Befestigungsadapter 3 als von der Steckdosenleiste 2 separierbares Teil ausgebildet und mindestens ein erstes Formschlusselement 10 aufweist, welches mit mindestens einem zweiten Formschlusselement 11 der Steckdosenleiste 2 reversibel verbindbar ist.

Konkret ist das erste Formschlusselement 10 als ein im Querschnitt T-förmiger, von einer Ebene 12 abragender Balken ausgestaltet, wobei das zweite Formschlusselement 11 als im Querschnitt T-förmige Nut zur Aufnahme des Balkens ausgebildet ist. Der Balken und die Nut sind orthogonal zur Montagefläche 1 orientiert. Es sind eine Vielzahl von Nuten und Balken vorgesehen, welche miteinander einen Formschluss eingehen, wenn die Steckdosenleiste 2 auf den Befestigungsadapter 3 aufgeschoben wird.

Fig. 11 ist ebenfalls gut entnehmbar, dass der Befestigungsadapter 3 als längliche Leiste ausgebildet ist, welche einen Mittelabschnitt 13 mit mehreren Balken aufweist, wobei beidseits des Mittelabschnitts 13 jeweils mindestens ein Anbindemittel 14 ausgebildet ist, welches jeweils mit einem Positioniermittel, nämlich einer Schiene 8, verbunden ist. Ganz konkret ist ein Anbindemittel 14 mit einer Schiene 8 verschraubt.

Fig. 13 zeigt deutlich, dass an der Steckdosenleiste 2 zwei Rastzungen 15 angeordnet sind. Die zwei gegenüberliegenden Rastzungen 15 sind mit zwei gegenüberliegenden Rastaufnahmen 9 des Befestigungsadapters 3 reversibel verrastbar. Die Rastaufnahmen 9 sind in Fig. 11 dargestellt. Durch ein Werkzeug, beispielsweise einen Schraubendreher, können die Rastzungen 15 in eine Position gedrückt werden, die erlaubt, die Steckdosenleiste 2 wieder vom Befestigungsadapter 3 abzuziehen.

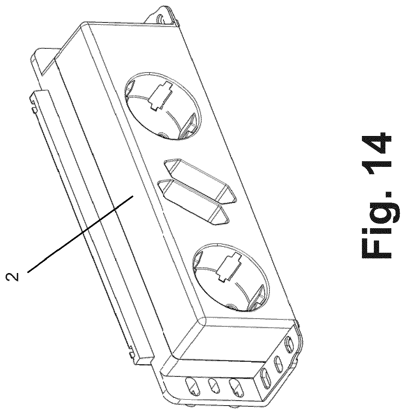

Fig. 14 zeigt die Steckdosenleiste gemäß Fig. 13 von vorne. Es sind vier Steckdosen vorgesehen, welche vier Stecker aufnehmen können.

Die hier beschriebenen Anordnungen können zur Verwendung in einem Verteilerkasten vorgesehen sein.

Wesentlich ist dabei, dass die Positioniermittel, welche die definierte Position des Befestigungsadapters 3 auf oder in oder an der Montagefläche 1 bestimmen, sowohl punktuell als auch länglich, nämlich in Form von Schienen, ausgestaltet sein können.

**Bezugszeichenliste**

| | |
|---|---|
| 1 | Montagefläche |
| 2 | Steckdosenleiste |
| 3 | Befestigungsadapter |
| 4 | Dom |
| 5 | Gehäuseabdeckung |
| 6, 6' | Gehäuse |
| 7 | Randeinfassung |
| 8 | Schiene |
| 9 | Rastaufnahme |
| 10 | Erstes Formschlusselement |
| 11 | Zweites Formschlusselement |
| 12 | Ebene |
| 13 | Mittelabschnitt |
| 14 | Anbindemittel |
| 15 | Rastzunge |
| 16 | Traverse |

## Patentansprüche

1. Anordnung zur Verwendung in einem Verteilerkasten, umfassend eine Montagefläche (1) zur mittelbaren oder unmittelbaren Befestigung von Schienen (8) und/ oder Installationsgeräten sowie mindestens eine Steckdosenleiste (2) mit Steckdosen für die Entnahme von Netzstrom, wobei die Steckdosenleiste (2) mit einem Befestigungsadapter (3) verbunden oder reversibel verbindbar ist, wobei auf und/ oder innerhalb der Montagefläche (1) mindestens ein Positioniermittel zum definierten Positionieren des Befestigungsadapters (3) innerhalb der Montagefläche (1) angeordnet ist und wobei der Befestigungsadapter (3) als von der Steckdosenleiste (2) separierbares Teil ausgebildet ist und mindestens ein erstes Formschlusselement (10) aufweist, welches mit mindestens einem zweiten Formschlusselement (11) der Steckdosenleiste (2) reversibel verbindbar und/ oder verrastbar ist, wobei der Befestigungsadapter (3) als längliche Leiste ausgebildet ist, welche einen Mittelabschnitt (13) aufweist, wobei beidseits des Mittelabschnitts (13) jeweils mindestens ein Anbindemittel (14) ausgebildet ist, welches jeweils mit einem der mindestens ein Positioniermittel verbindbar oder verbunden ist, **dadurch gekennzeichnet, dass** das erste oder zweite Formschlusselement (10, 11) als ein im Querschnitt T-förmiger, von einer Ebene (12) abragender Balken ausgestaltet ist, wobei das zweite bzw. erste Formschlusselement (11, 10) als im Querschnitt T-förmige Nut zur Aufnahme des Balkens ausgebildet ist und wobei an der Steckdosenleiste (2) oder dem Befestigungsadapter (3) mindestens eine Rastzunge (15) angeordnet ist, welche mit einer Rastaufnahme (9) des Befestigungsadapters (3) bzw. der Steckdosenleiste (2) reversibel verrastbar ist.

2. Anordnung nach Anspruch 1, **dadurch gekennzeichnet, dass** mindestens ein Positioniermittel als Dom (4) oder Vertiefung ausgestaltet ist, mit welchem bzw. mit welcher der Befestigungsadapter (3) kraft-, form- und/ oder stoffschlüssig verbindbar oder verbunden ist.

3. Anordnung nach Anspruch 1 oder 2, **dadurch gekennzeichnet, dass** mindestens ein Positioniermittel als Schiene (8) ausgestaltet ist, mit welcher der Befestigungsadapter (3) kraft-, form- und/ oder stoffschlüssig verbunden ist oder mit welcher der Befestigungsadapter (3) an verschiedenen Positionen kraft-, form- und/ oder stoffschlüssig längs der Schiene (8) verbindbar ist.

4. Anordnung nach einem der voranstehenden Ansprüche, **dadurch gekennzeichnet, dass** die Montagefläche (1) als Grundplatte eines zumindest teilweise offenen oder zumindest teilweise verschließbaren Gehäuses (6, 6') ausgebildet ist.

5. Anordnung nach einem der voranstehenden Ansprüche, **dadurch gekennzeichnet, dass** die Einsteckrichtung von Steckern in die Steckdosen der Steckdosenleiste (2) orthogonal zur Montagefläche (1) orientiert ist.

6. Verteilerkasten zur Verwendung als Industrieverteilerkasten, umfassend eine Anordnung nach einem der voranstehenden Ansprüche.

## Claims

1. Arrangement for use in a distribution box, comprising a mounting surface (1) for indirectly or directly fastening rails (8) and/or installation devices and also comprising at least one socket strip (2) with sockets for drawing mains power, wherein the socket strip (2) is connected or can be reversibly connected to a fastening adapter (3), wherein at least one positioning means for defined positioning of the fastening adapter (3) within the mounting surface (1) is arranged on and/or within the mounting surface (1), and wherein the fastening adapter (3) is designed as a part which can be separated from the socket strip (2) and has at least one first interlocking element (10) which can be reversibly connected and/or latched to at least one second interlocking element (11) of the socket strip (2), wherein the fastening adapter (3) is designed as an elongate strip which has a central section (13), wherein in each case at least one joining means (14), which can be connected or is connected to one of the at least one positioning means in each case, is formed on either side of the central section (13), **characterized in that** the first or second interlocking element (10, 11) is configured as a bar of T-shaped cross section which projects from a plane (12), wherein the second or first interlocking element (11, 10) is designed as a groove of T-shaped cross section for receiving the bar, and wherein at least one latching tongue (15), which can be reversibly latched to a latching receptacle (9) of the fastening adapter (3) or the socket strip (2), is arranged on the socket strip (2) or the fastening adapter (3) .

2. Arrangement according to Claim 1, **characterized in that** at least one positioning means is configured as a dome (4) or recess to which the fastening adapter (3) can be connected or is connected in a force-fitting, interlocking and/or materially bonded manner.

3. Arrangement according to Claim 1 or 2, **characterized in that** at least one positioning means is configured as a rail (8) to which the fastening adapter (3) is connected in a force-fitting, interlocking and/or materially bonded manner or to which the fastening adapter (3) can be connected in various positions in a force-fitting, interlocking and/or materially bonded manner along the rail (8).

4. Arrangement according to one of the preceding claims, **characterized in that** the mounting surface (1) is designed as a base plate of an at least partially open or at least partially closable housing (6, 6').

5. Arrangement according to one of the preceding claims, **characterized in that** the insertion direction for plugs into the sockets of the socket strip (2) is oriented orthogonally in relation to the mounting surface (1).

6. Distribution box for use as an industrial distribution box, comprising an arrangement according to one of the preceding claims.

## Revendications

1. Agencement destiné à être utilisé dans une boîte de distribution, comportant une surface de montage (1) pour la fixation indirecte ou directe de rails (8) et/ou d'appareils d'installation, ainsi qu'au moins une multiprise (2) munie de prises pour le soutirage de courant de réseau, la multiprise (2) étant reliée ou pouvant être reliée de manière réversible à un adaptateur de fixation (3), au moins un moyen de positionnement pour le positionnement défini de l'adaptateur de fixation (3) dans la surface de montage (1) étant agencé sur et/ou dans la surface de montage (1), et l'adaptateur de fixation (3) étant configuré sous la forme d'une partie séparable de la multiprise (2) et comprenant au moins un premier élément de complémentarité de forme (10), qui peut être relié et/ou peut être encliqueté de manière réversible avec au moins un deuxième élément de complémentarité de forme (11) de la multiprise (2),
l'adaptateur de fixation (3) étant configuré sous la forme d'une barre allongée, qui comprend une section centrale (13), au moins un moyen de raccordement (14) étant formé respectivement des deux côtés de la section centrale (13), qui peut être relié ou est relié respectivement avec un des au moins un moyen de positionnement, **caractérisé en ce que** le premier ou deuxième élément de complémentarité de forme (10, 11) est conçu sous la forme d'une poutre en forme de T dans la section transversale, faisant saillie à partir d'un plan (12), le deuxième ou premier élément de complémentarité de forme (11, 10) étant configuré sous la forme d'une rainure en forme de T dans la section transversale pour la réception de la poutre, et au moins une languette d'encliquetage (15) étant agencée sur la multiprise (2) ou l'adaptateur de fixation (3), qui peut être encliquetée de manière réversible avec un logement d'encliquetage (9) de l'adaptateur de fixation (3) ou de la multiprise (2).

2. Agencement selon la revendication 1, **caractérisé en ce qu'**au moins un moyen de positionnement est conçu sous la forme d'un dôme (4) ou d'un creux, avec lequel l'adaptateur de fixation (3) peut être relié ou est relié par complémentarité de force, de forme et/ou de matière.

3. Agencement selon la revendication 1 ou 2, **caractérisé en ce qu'**au moins un moyen de positionnement est conçu sous la forme d'un rail (8), avec lequel l'adaptateur de fixation (3) est relié par complémentarité de force, de forme et/ou de matière ou avec lequel l'adaptateur de fixation (3) peut être relié à différentes positions par complémentarité de force, de forme et/ou de matière le long du rail (8).

4. Agencement selon l'une quelconque des revendications précédentes, **caractérisé en ce que** la surface de montage (1) est configurée sous la forme d'une plaque de base d'un boîtier (6, 6') au moins partiellement ouvert ou pouvant au moins partiellement être fermé.

5. Agencement selon l'une quelconque des revendications précédentes, **caractérisé en ce que** la direction d'enfichage de connecteurs dans les prises de la multiprise (2) est orientée orthogonalement à la surface de montage (1).

6. Boîte de distribution destinée à être utilisée en tant que boîte de distribution industrielle, comportant un agencement selon l'une quelconque des revendications précédentes.
